# EUROPEAN PATENT APPLICATION

(11) **EP 4 401 195 A1**
(43) Date of publication of application: **17.07.2024**
(21) Application number: 23194231.9
(22) Date of filing: 30.08.2023
(51) Int. Cl.: H01M 10/613, H01M 10/6553, H01M 10/6556, H01M 50/105, H01M 50/178, H01M 50/211, H01M 50/55, H01M 50/557, H01M 50/548, H01M 10/647

(54) **SECONDARY BATTERY**

(30) Priority: 13.01.2023 KR 20230005659
(71) Applicant: SK On Co., Ltd., Seoul 03161 (KR)
(72) Inventor: KO, Tae Kon, 34124 Daejeon (KR)
(74) Representative: Bird & Bird LLP

(57) **Abstract**

Proposed is a secondary battery, including a battery cell having electrode tabs extending outwardly, a heat-shrinkable tube covering an outer perimeter surface of the battery cell, and a heat dissipation member interposed between the outer perimeter surface of the battery cell and the heat-shrinkable tube and disposed in extending directions of the electrode tabs. The heat dissipation member dissipates heat generated in the battery cell to the outside.

## Description

### CROSS REFERENCE TO RELATED APPLICATION

This application claims priority to Korean Patent Application No. 10-2023-0005659, filed January 13,2023.

### BACKGROUND OF THE INVENTION

### Field of the Invention

The present disclosure relates generally to a secondary battery and, more particularly, to a pouch-type secondary battery.

### Description of Related Art

As is well known in the art, secondary batteries are batteries which can be repeatedly charged and discharged. The secondary batteries are widely used as power sources with output characteristics and stability for electric vehicles (EVs), hybrid vehicles (HEVs), and energy storage systems (ESSs).

Depending on the shape of an outer casing in which an electrode assembly is accommodated, the secondary batteries may be classified into a cylinder type, a prismatic type, or a pouch type. Recently, the demand for thin pouch-type secondary batteries has increased.

A pouch-type secondary battery includes an electrode assembly in which a positive electrode plate, a separator, and a negative electrode plate are sequentially stacked, a pouch casing for accommodating the electrode assembly and an electrolyte solution, and electrode tabs electrically connected to the electrode assembly and extending outwardly. In order to seal the electrode assembly and the electrolyte solution inside a pouch, a sealing portion is formed along edges of the pouch casing made of a multilayer aluminum laminate sheet by a bonding method such as thermal fusion.

A drawback of the conventional pouch-type secondary battery is that the overall volume of a battery module increases due to the sealing portion extending outwardly from the edges thereof. In an effort to overcome the above drawback, as described in Patent Document 1, there has been proposed a technique of reducing the volume of a secondary battery by folding a sealing portion of the secondary battery and covering an outer perimeter surface of the secondary battery with an outer cover. With this technique, the energy density, that is, the volume energy density, of the secondary battery can be enhanced, and damage to a casing in which an electrode assembly is mounted can be prevented.

However, since the outer cover is shrinkable upon heating to make close contact with the outer perimeter surface of the secondary battery, this can limit the ability to dissipate heat generated in the secondary battery. In addition, an air pocket formed between the sealing portion in a folded state surrounded by the outer cover and the outer surface of the secondary battery increases the residence time of air, making it difficult to obtain a smooth heat dissipation effect.

The foregoing is intended merely to aid in the understanding of the background of the present disclosure, and is not intended to mean that the present disclosure falls within the purview of the related art that is already known to those skilled in the art.

### Documents of Related Art

(Patent document 1) Korean Patent No. 10-0300427

### SUMMARY OF THE INVENTION

Accordingly, the present disclosure has been made keeping in mind the above problems occurring in the related art, and an objective of the present disclosure is to provide a secondary battery that rapidly dissipates heat generated in a battery cell to the outside by means of a heat dissipation member, while enhancing close contact between the battery cell and the heat dissipation member through heat-shrinking of a heat-shrinkable tube.

In order to achieve the above objective, according to some embodiments of the present disclosure, there is provided a secondary battery, comprising: a battery cell comprising electrode tabs extending outwardly therefrom; a heat-shrinkable tube covering an outer perimeter surface of the battery cell; and a heat dissipation member interposed between the outer perimeter surface of the battery cell and the heat-shrinkable tube and disposed in extending directions of the electrode tabs. Here, the heat dissipation member may dissipate heat generated in the battery cell to the outside.

In some embodiments of the present disclosure, the heat-shrinkable tube may be disposed so that an axial direction thereof coincides with the extending directions of the electrode tabs.

In some embodiments of the present disclosure, the heat dissipation member may extend to a length longer than an axial direction length of the heat-shrinkable tube.

In some embodiments of the present disclosure, the battery cell may comprise: an electrode assembly; the electrode tabs extending from the electrode assembly; and a pouch casing comprising an accommodating portion accommodating the electrode assembly and a sealing portion formed along edges of the accommodating portion to allow the electrode tabs to extend outwardly therethrough. Here, the sealing portion may comprise a first sealing portion in which the electrode tabs are disposed and a second sealing portion in which the electrode tabs are not disposed.

In some embodiments of the present disclosure, an end of the second sealing portion may be folded to form a folding surface, and the folding surface of the second sealing portion may be bent to face the accommodating portion.

In some embodiments of the present disclosure, the heat dissipation member may be disposed in a space between the accommodating portion and the second sealing portion.

In some embodiments of the present disclosure, the heat dissipation member may extend to a length longer than a length of the accommodating portion along a longitudinal direction of the battery cell.

In some embodiments of the present disclosure, the heat dissipation member may comprise a hollow flow path therein.

In some embodiments of the present disclosure, the secondary battery may further comprise a guide block at an end of the heat dissipation member to supply a refrigerant to an adjacent battery cell.

In some embodiments of the present disclosure, the guide block may comprise: a body formed in a size and shape that can cover the first sealing portion of the battery cell; a through-hole formed through the body in a thickness direction of the body; and a connection port comprising a first inner pipe coupled in fluid communication with the end of the heat dissipation member and extending into the body from a facing surface facing the first sealing portion, a second inner pipe extending outwardly from the first inner pipe in a stacking direction of the adjacent battery cell, and an external connection pipe extending in fluid communication with the second inner pipe.

In some embodiments of the present disclosure, the heat-shrinkable tube may shrink by heat, and the heat dissipation member may be made of a thermally conductive material.

The features and advantages of the present disclosure will be more clearly understood from the following detailed description when taken in conjunction with the accompanying drawings.

All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

According to the present disclosure having the above-described configuration, by providing the heat-shrinkable tube covering the outer perimeter surface of the battery cell, it is possible to enhance heat dissipation along with close contact between the battery cell and the heat dissipation member. In addition, by reducing the volume of the secondary battery through heat-shrinking of the heat shrinkable tube, it is possible to enhance the volumetric energy density of the secondary battery.

Furthermore, by guiding gas to be vented to a sealing area in which the electrode tabs having relatively weak sealing strength are disposed, it is possible to ensure the stability of the secondary battery.

In particular, by disposing the heat dissipation member on the sealing portion in a folded state, it is possible to rapidly dissipate heat generated in the battery cell, and prevent deformation and swelling of the electrode assembly from occurring even under external impact such as pressure applied by the heat shrinkable tube.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view illustrating a secondary battery according to some embodiments of the present disclosure;
FIG. 2 is a view schematically illustrating a process of coupling a heat shrinkable tube to a battery cell;
FIG. 3 is a sectional view schematically illustrating part A of FIG. 1, illustrating an arrangement of a sealing portion of a pouch casing and the heat-shrinkable tube;
FIG. 4 is a perspective view illustrating a secondary battery according to some embodiments of the present disclosure;
FIG. 5 is a sectional view schematically illustrating part B of FIG. 4, illustrating an arrangement of a sealing portion of a pouch casing and a heat-shrinkable tube;
FIG. 6 is an exploded perspective view schematically illustrating a secondary battery according to some embodiments of the present disclosure;
FIG. 7 is a partially cut-away perspective view illustrating a guide block illustrated in FIG. 6; and
FIG. 8 is a view illustrating a state in which secondary batteries according to some embodiments of the present disclosure are stacked and arranged in one direction.

### DESCRIPTION OF THE INVENTION

The objectives, advantages, and features of the present disclosure will be more clearly understood from the following detailed description and embodiments when taken in conjunction with the accompanying drawings, but the present disclosure is not necessarily limited thereto. Further, in the following description of the present disclosure, a detailed description of related known configurations or functions may be omitted to avoid obscuring the subject matter of the present disclosure.

The embodiments described herein and the accompanying drawings are not intended to limit the present disclosure to specific embodiments. It should be understood that the present disclosure covers various modifications, equivalents, and/or alternatives of the embodiments.

As for reference numerals associated with parts in the drawings, the same or similar reference numerals will refer to the same or similar parts throughout the drawings.

It will be understood that, although the terms "first", "second", and the like may be used only to distinguish one element from another element, these elements should not be limited by these terms. In the drawings, some elements are exaggerated, omitted, or schematically illustrated, and the size of each element does not exactly reflect its real size.

Unless the context clearly indicates otherwise, the singular forms of the terms used in the present specification may be interpreted as including the plural forms. As used herein, the singular form of "a", "an", and "the" include plural referents unless the context clearly states otherwise.

Herein, some embodiments of the present disclosure will be described in detail with reference to the accompanying drawings.

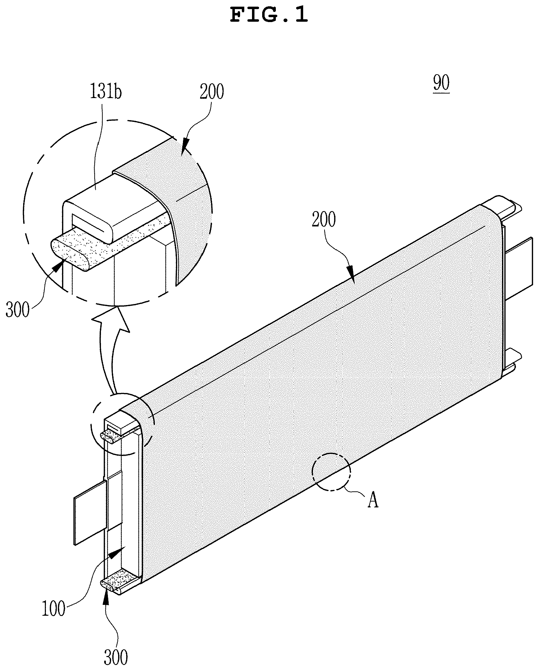

As illustrated in FIGS. 1 to 3, a secondary battery, indicated generally as reference sign 90, according to a first embodiment of the present disclosure is configured such that an outer perimeter surface of a battery cell 100 is covered with a heat-shrinkable tube 200.

As is well known to those skilled in the art, the battery cell 100 comprises an electrode assembly 110, electrode tabs 120 extending outwardly from the electrode assembly 110, and a pouch casing 130 providing a space in which the electrode assembly 110 is accommodated and sealing a first portion 122 of the electrode tabs 120, leaving a second portion 124 of the electrode tabs 120 exposed to the outside.

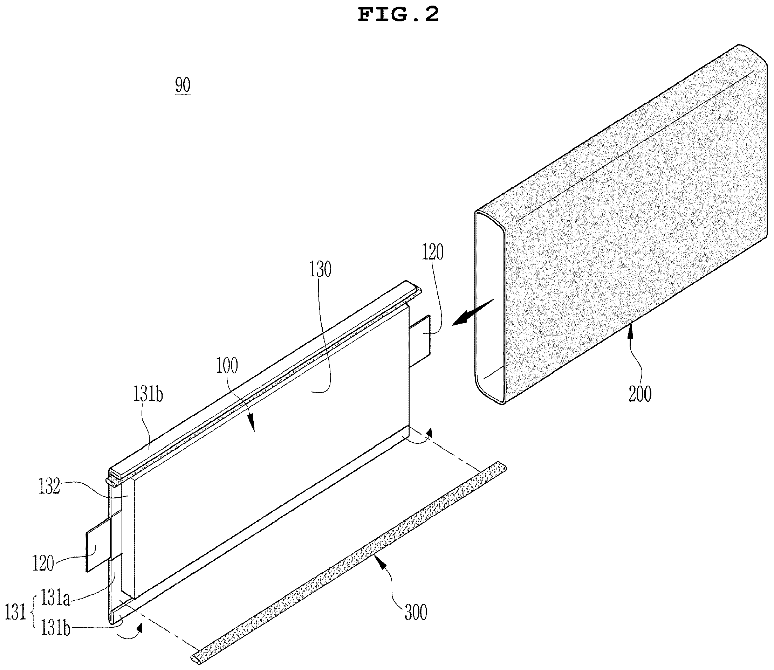

The electrode assembly 110 is a power generating element that is stacked or wound with a separator interposed between a positive electrode plate and a negative electrode plate. The electrode tabs 120 are electrically coupled to electrode plates accommodated inside the pouch casing 130, for example, a positive electrode plate and a negative electrode plate, respectively. The electrode tabs 120 extend from inside the pouch casing to outside of the pouch casing 130, as shown in FIG. 2.

The pouch casing 130 may comprise: a sealing portion 131 forming an inner space with ends of the electrode tabs 120 extending outwardly, and formed by facing an upper pouch surrounding an upper side of the electrode assembly 110 and a lower pouch surrounding a lower side of the electrode assembly 110 and then sealing edges of the upper and lower pouches by thermal fusion; and an accommodating portion 132 providing an inner space for accommodating the electrode assembly 110 and an electrolyte solution between the upper pouch and the lower pouch disposed spaced apart from each other inside the sealing portion 131.

In some embodiments, the sealing portion 131 is formed in a flange shape extending outwardly from the accommodating portion 132 providing the inner space, and as illustrated, may be formed along edges of the accommodating portion 132. Of course, the sealing portion 131 may be formed by sealing at least a part of the edges of the accommodating portion 132.

In some embodiments, the sealing portion 131 may comprise a first sealing portion 131a in which the electrode tabs 120 are disposed and a second sealing portion 131b in which the electrode tabs 120 are not disposed. For reference, the second sealing portion 131b may mean a sealing area formed along the extending directions of the electrode tabs 120 and/or in the longitudinal direction of the battery cell 100.

In some embodiments, the pouch casing 130 may comprise a metal thin film layer (aluminum layer) and an insulating layer formed from resin on the metal thin film layer. The insulating layer to be used as a sealing material is heat-compressed to form a seal along edges of a pouch.

As described above, the secondary battery according to the first embodiment of the present disclosure is characterized in that the outer perimeter surface of the battery cell 100 is covered with the heat-shrinkable tube 200. A heat dissipation member 300 is inserted and disposed between the outer perimeter surface of the battery cell 100 and the heat-shrinkable tube 200.

Here, the heat-shrinkable tube 200 may be made from a composition comprising a heat-shrinkable resin that shrinks by heat, but is not limited thereto, and for example may be made of a polymer material such as heat-resistant rubber that covers and compresses the outer perimeter surface of the battery cell 100. The heat-shrinkable resin is not particularly limited as long as it is a material having durability, insulating ability, and heat-shrinkability, and may comprise a polyester-based resin, a polypropylene-based resin, a polyolefin-based resin, a polystyrene-based resin, a polyvinyl chloride-based resin, a polyvinylidene chloride-based resin, and/or the like.

In some embodiments, the heat-shrinkable tube 200 may be formed in a hollow tube shape to cover the outer perimeter surface of the battery cell 100 except for the first sealing portion 131a in which external input/output terminals, for example, the electrode tabs 120 are disposed. The heat-shrinkable tube 200 is disposed so that the axial direction thereof coincides with the extending directions of the electrode tabs 120, so that the electrode tabs 120 of the battery cell 100 are exposed to the outside through open ends of the heat-shrinkable tube 200.

The battery cell 100 may be inserted into the heat-shrinkable tube 200 through the open ends of the heat-shrinkable tube 200 along the direction of the arrow illustrated in FIG. 2 (i.e., the tube axis direction of the heat-shrinkable tube 200).

The present disclosure describes, as an example, a battery cell in which the electrode tabs 120 extend in opposite directions from both ends of the electrode assembly 110, i.e., extend in both directions (bidirectionally) to be opposite to each other. The heat-shrinkable tube 200 has the open ends at both ends thereof so that the electrode tabs 120 are exposed in both directions even when the battery cell 100 is covered with the heat-shrinkable tube 200.

On the other hand, the present disclosure is also applicable to a battery cell in which electrode tabs are spaced apart from each other and extend in the same direction from one end of an electrode assembly, i.e., extend in one direction (unidirectionally) to be parallel to each other. In this case, the present disclosure may employ a heat-shrinkable tube comprising a container-type (or encapsulated) structure comprising an open first end and a closed second end opposite to the first end, but is not limited thereto, and the heat-shrinkable tube 200 with the open both ends as described above may also be employed to cover the battery cell.

The heat-shrinkable tube 200 has an inner size that can accommodate the battery cell 100 in an unshrunk state. When the battery cell 100 is inserted into the heat-shrinkable tube 200 and heat is applied to the heat-shrinkable tube 200, the heat-shrinkable tube 200 is brought into close contact with the outer perimeter surface of the battery cell 100. This consequently suppresses or minimizes formation of an air pocket between the outer perimeter surface of the battery cell 100 and the heat-shrinkable tube 200, thereby reliably preventing air from staying between the battery cell 100 and the heat-shrinkable tube 200.

The heat dissipation member 300 is a member that dissipates heat generated in the battery cell 100 during charging and discharging to the outside, and may be formed in a long and thin rod shape to expose both ends or one end of the heat dissipation member 300 to the outside. In some embodiments, the heat dissipation member 300 is formed long along the side or length of second sealing portion 131b of the battery cell 100, and guides the heat generated in the battery cell 100 during charging or discharging to an end of the heat dissipation member 300 to reduce temperature differences along the longitudinal direction of the battery cell 100, thereby enhancing durability of the secondary battery. To this end, the heat dissipation member 300 may extend to a length longer than an axial direction length of the heat-shrinkable tube 200, for example, it may extend to a length longer than that of the accommodating portion 132 along the longitudinal direction of the battery cell 100, or may extend to a length longer than that of the second sealing portion 131b. In some embodiments, one or two or more heat dissipation member(s) 300 may be used. For example, two heat dissipation members 300 are shown in FIG. 1, on opposite sides within the battery cell 100. The number and position of the heat dissipation member(s) 300 can be varied, so long as a portion of the length of the heat dissipation member 300 extends outside of the battery cell 100.

In some embodiments, the heat dissipation member 300 may be made of a thermally conductive material, such as aluminum.

In some embodiments, a portion of the sealing portion 131 of the battery cell 100, for example the second sealing portion 131b, is bent to minimize the volume thereof. With this structure, formation of an air pocket between the battery cell 100 and the heat-shrinkable tube 200 is suppressed, thereby reducing the overall volume of the secondary battery and thus enhancing the volumetric energy density of the secondary battery.

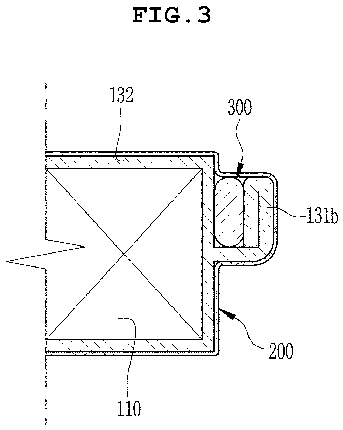

In some embodiments, the second sealing portion 131b of the battery cell 100 is bent to face the accommodating portion 132, and then the battery cell 100 is inserted into a hollow portion of the heat-shrinkable tube 200 through the open ends of the heat-shrinkable tube 200, as shown for example in FIG. 3. As described above, when heat is applied while accommodating the battery cell 100, the heat-shrinkable tube 200 shrinks into a shape corresponding to the outer shape of the battery cell 100 to be brought into close contact with and fixed to the battery cell 100.

According to the present disclosure, the heat-shrinkable tube 200 supports and holds the heat dissipation member 300 by surrounding the outer perimeter surface of the battery cell 100 using a heat-shrinking action As described above, the heat dissipation member 300 is inserted and disposed between a portion of the outer perimeter surface of the battery cell 100 and a corresponding portion of the heat-shrinkable tube 200. In some embodiments, the heat dissipation member 300 is inserted and seated in a space between the accommodating portion 132 and the bent second sealing portion 131b of the pouch casing 130.

As the heat-shrinkable tube 200 heat-shrinks in the perimeter direction of the battery cell 100, the heat-shrinkable tube 200 surrounds and compresses the outer perimeter surface of the battery cell 100, in which the heat dissipation member 300 is disposed in the longitudinal direction of the battery cell 100, such as, for example, in the extending directions of the electrode tabs 120 in the space between the second sealing portion 131b and the accommodating portion 132 of the pouch casing 130. Thus, the present disclosure prevents an internal short circuit and damage to the electrode assembly 110 by increasing the mechanical strength of the secondary battery, while enhancing the heat dissipation performance with the heat dissipation member 300 in tight contact with the pouch casing 130. In addition, according to the present disclosure, the battery cell 100 is charged in a state of being compressed by the heat-shrinkable tube 200. With this structure, charging uniformity of the battery cell 100 is enhanced, and occurrence of a swelling phenomenon is suppressed during charging.

Also, due to good insulating properties thereof, the heat-shrinkable tube 200 ensures insulating properties on the outer perimeter surface of the battery cell 100.

In some embodiments according to the present disclosure, a vent flow of gas generated inside the battery cell 100 is guided, for example, in the extending directions of the electrode tabs 120. As illustrated in FIG. 1, for example, since the heat-shrinkable tube 200 covers the outer perimeter surface of the battery cell 100 except for the first sealing portion 131a in which the electrode tabs 120 are disposed, the gas generated in the battery cell 100 is safely discharged through the open ends of the heat-shrinkable tube 200.

A secondary battery may generate gas inside a battery cell due to overcharging or an internal short circuit. When the gas is generated inside a pouch casing due to an abnormal operating condition, the pressure or temperature is rapidly increased, with the result that the battery cell explodes. Explosion of the battery cell applies high temperature and high pressure to other adjacent battery cells, leading to a chain reaction that causes the other adjacent battery cells to explode. In order to suppress thermal propagation to adjacent battery cells in such a thermal runaway situation of the secondary battery, it is required to control the discharge direction of gas.

That is, according to the present disclosure, since the second sealing portion 131b is surrounded by the heat-shrinkable tube 200 covering the outer perimeter surface of the battery cell 100, the gas generated inside the battery cell 100 is discharged in a predetermined direction by guiding the gas to be vented in the extending directions of the electrode tabs 120 that are provided in directions orthogonal to the perimeter direction of the battery cell 100 and pass through the open ends of the heat-shrinkable tube 200.

In some embodiments according to the present disclosure, the second sealing portion 131b in which the electrode tabs 120 are not disposed is folded. With this structure, corrosion occurring at an adhesive bonding junction is prevented, and leakage of the gas and/or the electrolyte solution is prevented by increasing the rigidity of the sealing portion 131. As illustrated, an end of the second sealing portion 131b is folded by 180° by equal to or less than 1/2 of the width of the second sealing portion 131b to form a folding surface (no reference numeral), and then the second sealing portion 131b is bent toward the accommodating portion 132 of the pouch casing 130 so that the folding surface faces a side surface of the accommodating portion 132. The folding surface of the second sealing portion 131b has a width less than the thickness of the accommodating portion 132.

As described above, the folding surface of the second sealing portion 131b is tightly fixed to the pouch casing 130 by the heat-shrinkable tube 200, thereby minimizing the volume of the secondary battery and preventing occurrence of a spring-back phenomenon in which the second sealing portion 131b returns to the state before folding. Moreover, in some embodiments according to the present disclosure, the heat dissipation member 300 is disposed between the folding surface of the second sealing portion 131b and the pouch casing 130. With this structure, the heat-shrinking action of the heat-shrinkable tube 200 helps to fix the position of the heat dissipation member 300 without requiring a separate adhesive means.

As described above, in some embodiments according to the present disclosure, since the second sealing portion 131b is folded and the outer perimeter surface of the battery cell 100 is covered with the heat-shrinkable tube 200, the gas is quickly discharged from the inside to the outside of a battery module composed of a plurality of battery cells by allowing the gas to be vented in a predetermined direction, thereby enhancing safety.

A conventional pouch-type secondary battery is sealed with electrode tabs inserted between an upper pouch and a lower pouch. In this structure, the sealing strength may be lowered due to a step caused by the thickness of the electrode tabs. For example, when the internal pressure rises due to gas generated inside a battery cell, the gas is vented in a sealing area of the electrode tabs in which the sealing strength is weak In addition, the gas is likely to be vented in the vicinity of the electrode tabs in which the temperature rises relatively rapidly during charging and discharging.

In contrast to the structure of the conventional pouch-type secondary battery, the secondary battery of the present disclosure easily guides the gas to be vented in the extending directions of the electrode tabs 120.

In summary, according to the present disclosure, the heat dissipation member 300 is disposed in the extending directions of the electrode tabs 120 in the space between the accommodating portion 132 and the bent second sealing portion 131b of the pouch casing 130, and the heat dissipation member 300 is compressed by heat-shrinking the heat-shrinkable tube 200 and is brought into close contact with and fixed to the accommodating portion 132 of the pouch casing 130. Thus, the heat dissipation member 300 dissipates the heat generated in the battery cell 100 through contact with the side surface of the accommodating portion 132, and limits the bending angle of the second sealing portion 131b.

Some embodiments of the present disclosure employ a heat dissipation member 300 with a solid cross-section to transfer the heat of the battery cell 100 to the outside. Since the outer perimeter surface of the battery cell is compressed by the heat-shrinkable tube 200 in a state in which the heat dissipation member 300 is disposed, deformation of the electrode assembly 110 accommodated in the pouch casing 130 is prevented.

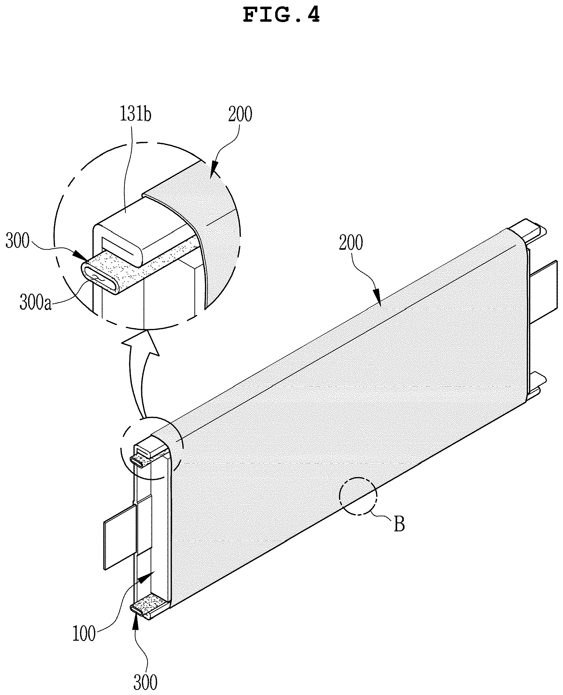

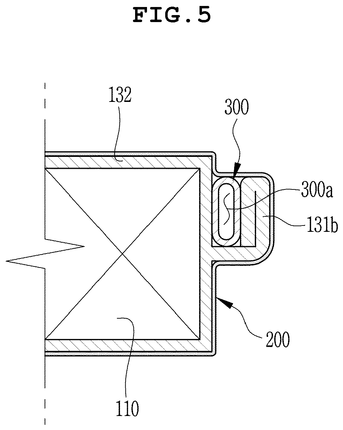

A secondary battery according to a second embodiment of the present disclosure will be described now with reference to FIGS. 4 and 5. The secondary battery illustrated in FIG. 4 is a modified example of the secondary battery according to the first embodiment illustrated in FIGS. 1 to 3, and has a substantially similar structure as that of the first embodiment except for the structure of the heat dissipation member 300. Thus, descriptions of similar or identical configurations will be omitted herein for a clear understanding of the present disclosure.

In the second embodiment of the present disclosure, a heat dissipation member 300 comprising a hollow cross-section is inserted and disposed between an outer perimeter surface of a battery cell 100 and a heat-shrinkable tube 200. In some embodiments, the heat dissipation member 300 having the hollow cross-section may be inserted and disposed in the space between an accommodating portion 132 and a bent second sealing portion 131b of a pouch casing 130. In some embodiments, the heat dissipation member 300 comprising the hollow cross-section may be inserted and disposed between the accommodating portion 132 and a folding surface of the bent second sealing portion 131b of the pouch casing 130. In some embodiments according to the present disclosure, positioning of the heat dissipation member 300 is assisted by the bent second sealing portion 131b, and heat-shrinking of the heat-shrinkable tube 200 causes the heat dissipation member 300 to be brought into close contact with and fixed in position to the pouch casing 130 of the battery cell 100.

In some embodiments, the heat dissipation member 300 comprises a hollow flow path 300a formed therein along the second sealing portion 131b in the longitudinal direction of the battery cell 100, and allows a refrigerant to move along the hollow flow path 300a.

As illustrated, in some embodiments according to the present disclosure, the heat dissipation member 300 comprising the hollow cross-section is disposed along the second sealing portion 131b in which electrode tabs 120 are not disposed so that the refrigerant passes through the hollow flow path 300a As the refrigerant flows along the hollow flow path 300a, the hollow flow path 300a absorbs heat transferred from a side surface of the second sealing portion 131b and the accommodating portion 132 of the battery cell 100 by means of the refrigerant, thereby rapidly cooling the battery cell 100. Here, the refrigerant may be a cold gas or cooling water, but is not limited thereto.

In some examples, the heat dissipation member 300 may be made of a thermally conductive material having good thermal conductivity, such as are discussed above.

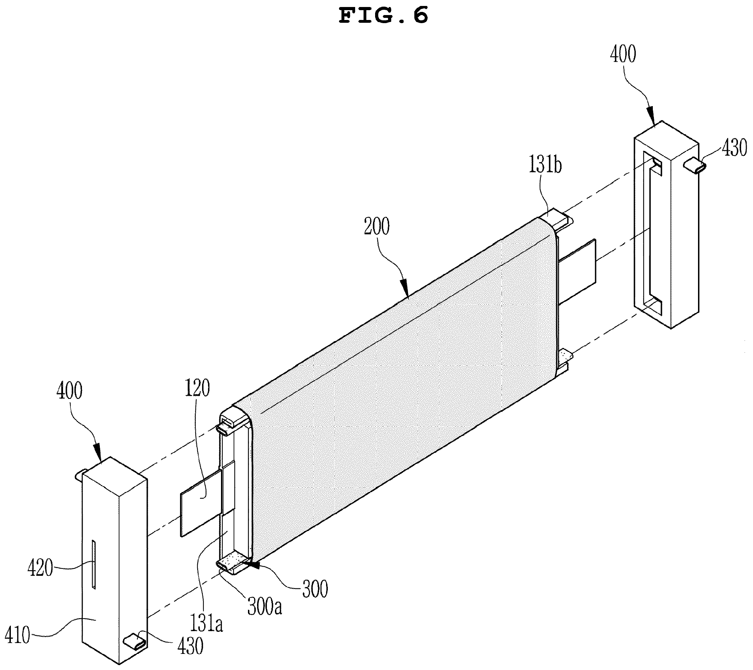

As illustrated in FIGS. 6 to 8, in a secondary battery according to a third embodiment of the present disclosure, a heat dissipation member 300 comprising a hollow cross-section is disposed along a second sealing portion 131b of a battery cell 100, and a heat-shrinkable tube 200 covers an outer perimeter surface of the battery cell 100 to compress the heat dissipation member 300.

In the third embodiment of the present disclosure, the secondary battery comprises a guide block 400 supplying a refrigerant to a hollow flow path 300a of the heat dissipation member 300 comprising the hollow cross-section.

As illustrated, a guide block 400 is disposed at each end of the heat dissipation member 300 extending outwardly from the heat dissipation member 300 for heat conduction Specifically, the guide block 400 is formed to accommodate a first sealing portion 131a in which electrode tabs 120 of the battery cell 100 are disposed.

The guide block 400 comprises a body 410 disposed on the first sealing portion 131a of the battery cell 100, a through-hole 420 formed through the body 410 in the thickness direction of the body 410, and a connection port 430 in fluid communication with an end of the heat dissipation member 300.

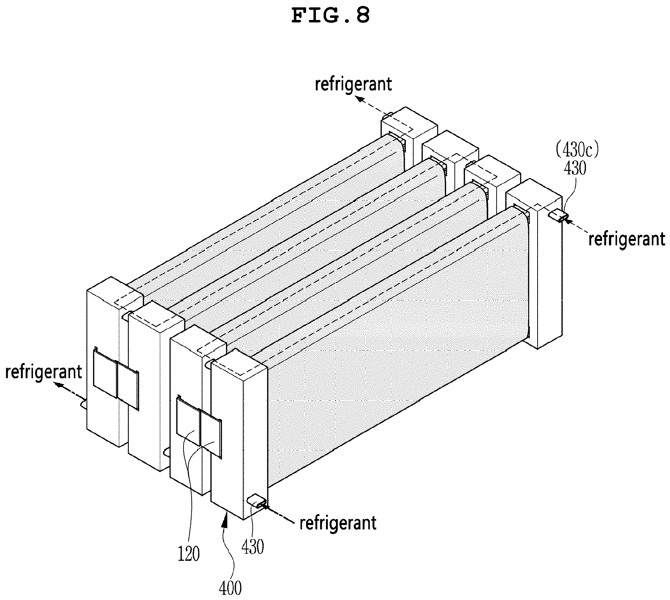

The body 410 is formed in a size and shape that can cover the first sealing portion 131a of the battery cell 100. The body 410 comprises an accommodating portion formed on a facing surface thereof facing the first sealing portion 131a, and allowing the first sealing portion 131a and an electrode tab 120 to be inserted and accommodated therein. The through-hole 420 is located in an exposed surface located opposite to the facing surface of the body 410. The through-hole 420 allows the electrode tab 120 disposed in the first sealing portion 131a to pass therethrough and protrude therefrom to the outside. As described above, the electrode tab 120 protrudes outwardly through the through-hole 420 and is connected to the electrode tab 120 of another adjacent battery cell 100 (see FIG. 8). Optionally, the guide block 400 may be made of an insulating material, such as .

In some embodiments, the guide block 400 ensures that gas generated in the battery cell 100 is vented through the through-hole 420.

The connection port 430 connects the heat dissipation member 300 of one battery cell 100 and the heat dissipation member 300 of another adjacent battery cell 100 to allow fluid communication therebetween, thereby providing a moving path for a refrigerant.

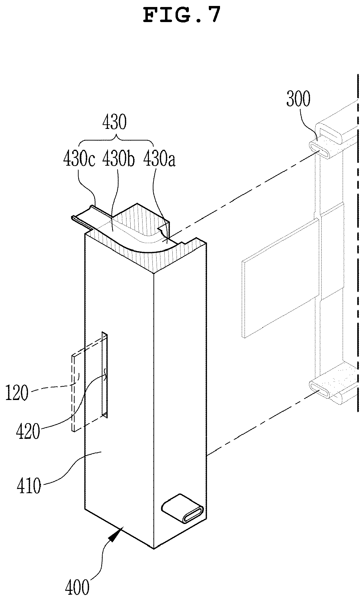

As shown for example in FIG. 7, the connection port 430 comprises a first inner pipe 430a extending from the facing surface toward the exposed surface of the body 410, a second inner pipe 430b extending in a direction orthogonal to the longitudinal direction of the first inner pipe 430a, and an external connection pipe 430c disposed in fluid communication with the second inner pipe 430b. The first inner pipe 430a and the second inner pipe 430b are disposed in fluid communication with each other. As illustrated, the first inner pipe 430a is coupled in fluid communication with the end of the heat dissipation member 300 comprising the hollow cross-section. In addition, the external connection pipe 430c helps to enable fluid communication between the second inner pipe 430b of one guide block 400 and the second inner pipe 430b of another adjacent guide block 400.

FIG. 8 is a view illustrating a plurality of battery cells 100 stacked and arranged in one direction in a battery module. Adjacent guide blocks 400 are coupled in fluid communication with each other through the external connection pipe 430c to allow the refrigerant to flow along the heat dissipation member 300 mounted on the second sealing portion 131b of each battery cell 100.

That is, according to the present disclosure, the plurality of battery cells 100 are cooled by the flow of the refrigerant by means of the guide block 400 and the heat dissipation member 300 comprising the hollow cross-section (see FIG. 4). For example, the refrigerant is supplied to the external connection pipe 430c of one guide block 400 coupled to the first sealing portion 131a on a first side of one battery cell 100, flows through the second inner pipe 430b and the first inner pipe 430a, and is guided to the hollow flow path 300a of the heat dissipation member 300 disposed in the longitudinal direction of the one battery cell 100. The refrigerant cools the battery cells through heat exchange with heat generated in the battery cells while flowing through the hollow flow path 300a. Thereafter, the refrigerant is transferred downstream and guided to the first and second inner pipes 430a and 430b of another guide block 400 coupled to the first sealing portion 131a on a second side of the one battery cell 100. The refrigerant is moved through the external connection pipe 430c from another guide block 400 coupled to the one battery cell 100 to the second inner pipe 430b of the guide block 400 coupled to another adjacent battery cell 100 through the external connection pipe 430c. The present disclosure is designed to sequentially supply the refrigerant to the plurality of battery cells through the flow of the refrigerant.

Furthermore, by disposing the guide blocks on the first sealing portions of each battery cell, a predetermined separation gap (no reference numeral) is provided between the plurality of battery cells stacked and arranged in one direction.

According to the present disclosure, a filling material such as a thermally conductive pad (not illustrated) may be inserted into the separation gap to dissipate heat from the densely arranged battery cells more quickly. In addition, when a battery cell swells, the volume thereof expands in the stacking direction of the battery cell, with the result that a large surface pressure is applied to adjacent battery cells. This may disturb the arrangement of the battery cells, and in severe cases, cause the pouch casing of the battery cell to burst. The separation gap also provides a gap that can accommodate swelling of the battery cell.

While the present disclosure has been described in detail with embodiments thereof, such embodiments are illustrative and are not given as limitations. It will be understood by those skilled in the art that the present disclosure can be modified or changed in various forms without departing from the technical spirit of the present disclosure.

Simple modifications or changes of the present disclosure belong to the scope of the present disclosure, and the detailed scope of the present disclosure will be more clearly understood by the accompanying claims.

## Claims

1. A secondary battery, comprising:
a battery cell (100) comprising electrode tabs (120) extending outwardly;
a heat-shrinkable tube (200) covering an outer perimeter surface of the battery cell (100); and
a heat dissipation member (300) interposed between the outer perimeter surface of the battery cell (100) and the heat-shrinkable tube (200) and disposed in extending directions of the electrode tabs (120),
wherein the heat dissipation member (300) dissipates heat generated in the battery cell (100) to the outside.

2. The secondary battery of claim 1, wherein the heat-shrinkable tube (200) is disposed so that an axial direction thereof coincides with the extending directions of the electrode tabs (120).

3. The secondary battery of any of claims 1 or 2, wherein the heat dissipation member (300) extends to a length longer than an axial direction length of the heat-shrinkable tube (200).

4. The secondary battery of claim 1, wherein the battery cell comprises:
an electrode assembly (110);
the electrode tabs (120) extending from the electrode assembly (110); and
a pouch casing (130) comprising an accommodating portion (132) accommodating the electrode assembly (110) and a sealing portion (131) formed along edges of the accommodating portion (132) to allow the electrode tabs (120) to extend outwardly therethrough,
wherein the sealing portion (131) comprises a first sealing portion (131a) in which the electrode tabs (120) are disposed and a second sealing portion (131b) in which the electrode tabs are not disposed.

5. The secondary battery of claim 4, wherein an end of the second sealing portion (131b) is folded to form a folding surface, and the folding surface of the second sealing portion (131b) is bent to face the accommodating portion (132).

6. The secondary battery of any of claims 4 or 5, wherein the heat dissipation member (300) is disposed in a space between the accommodating portion (132) and the second sealing portion (131b).

7. The secondary battery of any of claims 4 to 6, wherein the heat dissipation member (300) extends to a length longer than a length of the accommodating portion (132) along a longitudinal direction of the battery cell.

8. The secondary battery of any of claims 1 to 7, wherein the heat dissipation member (300) comprises a hollow flow path (300a) therein.

9. The secondary battery of claim 8, wherein the secondary battery (90) further comprises a guide block (400) at an end of the heat dissipation member (300) to supply a refrigerant to an adjacent battery cell.

10. The secondary battery of claim 9, wherein the guide block (400) comprises:
a body (410) formed in a size and shape that can cover the first sealing portion (131a) of the battery cell;
a through-hole (420) formed through the body (410) in a thickness direction of the body; and
a connection port (430) comprising a first inner pipe (430a) coupled in fluid communication with the end of the heat dissipation member (300) and extending into the body (410) from a facing surface facing the first sealing portion (131a), a second inner pipe (430b) extending outwardly from the first inner pipe (430a) in a stacking direction of the adjacent battery cell, and an external connection pipe (430c) extending in fluid communication with the second inner pipe (430b).

11. The secondary battery of claim 1, wherein the heat-shrinkable tube (200) shrinks by heat, and the heat dissipation member (300) is made of a thermally conductive material.
